# EUROPEAN PATENT APPLICATION

(11) **EP 1 964 703 A2**
(43) Date of publication of application: **03.09.2008**
(21) Application number: 08250674.2
(22) Date of filing: 28.02.2008
(51) Int. Cl.: B60J 7/08

(54) **Apparatus for enclosing vehicle transported material**

(30) Priority: 28.02.2007 GB 0703840
(71) Applicant: Harsh Ltd., Full Sutton York YO41 1HS (GB)
(72) Inventor: Hinds, Carl, Full Sutton, York YO41 1HS (GB); Hargreaves, Adam, Full Sutton, York YO41 1HS (GB); Speck, Stuart, Full Sutton, York YO41 1HS (GB)
(74) Representative: Tomkinson, Alexandra

(57) **Abstract**

The invention relates to a cover assembly (18) for use with a vehicle (2), and a vehicle including the same, said vehicle provided for transporting material such as rubble or waste in a container (14) which is typically mountable on and demountable from the vehicle. The cover assembly is provided to enclose an opening of the container such that during transport of the same, any material held within the skip is prevented from leaving the same and forming a hazard. The cover assembly incorporates first and second structures (20) which are movable between a first position in which the cover sheet material is in a storage position and an extended position fot which the sheet material is located over the opening of the skip.

## Description

The invention to which this application relates is apparatus in the form of an enclosure or cover assembly which can be used in conjunction with a vehicle for carrying material between first and second locations. In particular, the enclosure is for use on a vehicle of a type which is used to carry debris or other loose materials in an open demountable container between locations and which materials can, on occasion, spill over or be blown out of the container in which the same is provided. One particular form of this type of vehicle is that which is known as a skip lorry and which comprises a vehicle cab and chassis, with the chassis being provided with lifting arms, which allow a container, one form of which is known as a skip, to be moved between a mounted position for transport on the chassis and a demounted position for use on the ground adjacent to the vehicle.

The use of vehicles and containers of this type is well known and typically the empty container will be moved on the vehicle to a location for use whereupon the container is moved from the vehicle by the lifting arms, and onto the ground and is then left at that location until it is filled. Once the container has been used, the vehicle will again visit the location and lift the container, with the material therein, onto the vehicle chassis so that the vehicle and container can then move to a location where the loose material can be further processed and/or discarded as waste material.

A problem which has always been encountered and one which is increasingly being less tolerated, is loose material leaving the container during transport on the vehicle to the location for the material to be further processed or discarded. This causes potential danger to other users of the road following the vehicle as the falling material may form a hazard. It is also undesirable to have this material entering into the environment in an uncontrolled manner as the vehicle moves along the road, as potentially the material can be pollutants.

It is known to attempt to enclose the waste material within the container, during transport, by providing a net which is manually secured over the open top of the container. However, this has a number of problems, one of which is that, on occasion, the vehicle driver or other person is required to climb onto the vehicle chassis and move around the same to secure the cover at various positions on the container. This can be hazardous and dangerous to the person. Even if the container can be covered when on the ground, it is still time consuming and can be difficult to achieve when the height of the load is greater than the container.

A further problem is that the manually applied cover is typically only attached to the edges of the opening into the container and normally does not depend down the sides of the container, which means that it is still possible for loose material to escape from the container as the vehicle is moving along the road. Furthermore, the cover can in many instances not be properly secured to the container thereby allowing the Loose material to leave the container, or the cover may be torn or otherwise damaged after use which again means that it is possible for loose material to leave the container.

It is also known to provide a mechanical cover assembly for a different type of container, which has a tipper body as part of the vehicle in which waste material is held. In this case, the top edges of the walls which define the cavity for the material lie in the same plane. No lifting arms are provided on the vehicle, as the tipper body is either permanently, or semi-permanently connected to the vehicle. However, in this case, there is again a problem in that this apparatus can only lie across the flat open top and therefore there is still the possibility of loose material escaping. Furthermore, this ,apparatus is not suitable for use with a demountable container carrying vehicle, as it would clash with the container lifting arms of the same and furthermore, would not be capable of covering an open top of the type of container such as a skip, which has side walls with angularly changing top edges which define a non-planar opening.

An aim of the present invention therefore is to provide a cover assembly for use on a vehicle which has a removable container for loose material so as to retain the loose material within the vehicle as the same is transported between locations. A further aim is to provide an assembly which provides the required covering of the loose material in the container carrying vehicle.

In a first aspect of the invention there is provided a a cover assembly for a vehicle having a cab, a chassis to the rear of the cab and a container for carrying loose material which can be selectively moved via lifting arms, said cover assembly including a portion of sheet material and actuation means such that when the container is in a transport position on the vehicle, the sheet material can be selectively moved by the actuation means to a position at least substantially overlying an opening of the container to substantially enclose the said material within the container during transport of the same.

In the preferred embodiment, the portion of material is a sheet material which can be provided with or without apertures.

In on embodiment the sheet material is moved from a substantially wound position for storage purposes, to an extended position and preferably an end of the sheet material is fixed to the chassis and located at a level which is at or below the lowest point of the opening into the container cavity, when the container is mounted on the vehicle chassis and the opposing end of the sheet material when in an in use position also lies at a position at or below the lowest point of the opening of the container. By providing this particular arrangement, so it can be ensured that the whole of the opening, the edges of which in side elevation are typically non-planar in form, and part of each of the opposing end walls of the skip are coveted by the sheet material when extended and, as a result, the loose material is efficiently contained within the skip during transport.

In one embodiment, the actuation means comprise first and second structures, a first structure on a first side of the vehicle chassis and a second structure on the second side of the vehicle chassis and each of the respective structures are provided externally of the adjacent lifting arm and the side wall of the container, when the container is in position on the vehicle chassis. The position of the structures allows the movement of the sheet material between the extended and storage positions, without the possibility of the same snagging on either the container or the lifting arms. Thus, it will be appreciated that the required operation and movement of the lifting arms to move the container, can still be achieved without hindrance from the cover assembly of the invention.

In one embodiment, each of the first and second structures, comprises a series of members, said members pivotally and/or linearly movable with respect to each other, so as to allow articulated movement of the structures between the extended and storage positions of the cover assembly. This therefore ensures that the cover sheet material can be extended without the possibility of the same snagging on the container as it moves thereacross. This also allows coverage to be achieved of all conventional sizes of containers which are mounted on the chassis. Typically the structures are moved such that the sheet material only contacts the container and/or material therein when the sheet material has been substantially fully extended.

In one embodiment a rotatable drive is mounted for each structure on the chassis. This ensures that the structures and free ends of the same move about and arc above the skip opening to move the cover assembly between the extended and retracted positions.

In an alternative embodiment the articulation and control of movement of the members is achieved by use of a cam assembly, The cam is typically positioned to rotate on the chassis and is positioned intermediate the ends of each structure.

In either case the movement of both structures is synchronised.

Preferably, the free ends of each of the structures are located at or adjacent to the free end of the cover sheet material, which extends between the said members attached to a cross member or roller so as to move the free end of the sheet material to and from the fully extended position, The other end of the sheet material is attached to the chassis.

Typically the roller spring loaded such that the sheet material is kept under tension while being rolled and unrolled by the movement of the structures between the extended and storage positions. This is found to minimize snagging of the sheet material and generally improve the movement of the sheet material.

Typically, at least one of the members in each structure is telescopic or alternatively are hydraulically adjustable in both reach and rake, so as to allow the length of the structures to be selectively changed as the members move between extended and retracted positions.

If required, attachment means can be provided to be used when the cover is in an extended position and to retain the cover in position. It is envisaged that attachment means will not be necessary for the effective use of the cover if the load height is at the allowed height, but if the load height is higher than attachment means such as bungee ropes may be required to be used to further secure the cover in position by attaching the ropes to the skip or chassis.

In a further aspect of the invention, there is provided a cover assembly for a vehicle mounted skip, said cover assembly comprising a sheet material to be used as a cover, said sheet material moved between unrolled extended and rolled storage positions by first and second structures, spaced apart and attached to opposing sides of the vehicle, the free end of the respective structures supporting a roller on which a first end of the sheet material is mounted and guiding the movement of the roller and hence sheet material, between the extended and storage positions and wherein, the first and second structures are formed of a series of members, movable so as to allow the movement of the sheet material between the extended position covering an opening into the skip and a storage position withdrawn from the skip.

Typically, in a storage position, the sheet material is wound on the roller. Typically, the movement of the roller is driven by the movement of the structures to cause the guidance of the sheet material between extended and storage positions.

Typically, the cover assembly is provided with sheet material of a length such that in an extended position the same overlies the opening of a container having a cavity for the carrying of material therein and is of a width substantially equal to or greater than the width of the container opening such that the sheet material substantially covers the opening of the container to thereby retain the loose material therein. Typically the sheet material is of a length to allow the same to partially overlie one or both of the opposing end walls of the container. Preferably additional sheet material is provided on the roller even when the sheet material is extended. The additional sheet material allows the covering of loads which arc particularly high, of irregular dimensions and/or general overloading to be achieved, and in particular the covering of the opening and at least part of the end walls.

Typically, the operation of the cover assembly can be performed by a person without having to move onto or gain access to the vehicle chassis or the container. Preferably, the control is achieved via a control means mounted in the cab of the vehicle or at a location which is accessible externally of the vehicle, or via remote control. This therefore prevents the need for a person to climb onto the chassis and/or container to secure the cover and thereby greatly reduces the chance of injury to the person. Also, the fact that the cover assembly provides sheet material which is of a size to fully enclose the opening of the container thereby provides a significantly improved enclosure of the loose material within the container to prevent the same from escaping from the container during transit.

Specific embodiments of the invention are now described with reference to the accompanying drawings, wherein:
Figure 1 illustrates an elevation of a vehicle of a type with which the invention in accordance with this application can be used to particular effect;
Figure 2 illustrates a vehicle chassis with a cover assembly in accordance with one embodiment of the invention fitted thereto in a storage position;
Figure 3 illustrates an end elevation of Figure 2;
Figures 4a-d illustrate a vehicle chassis with skip thereon and the cover assembly of the invention being moved between storage and extended positions; and
Figures 5a-b illustrate elevation and side elevation views of an alternative embodiment of the invention.

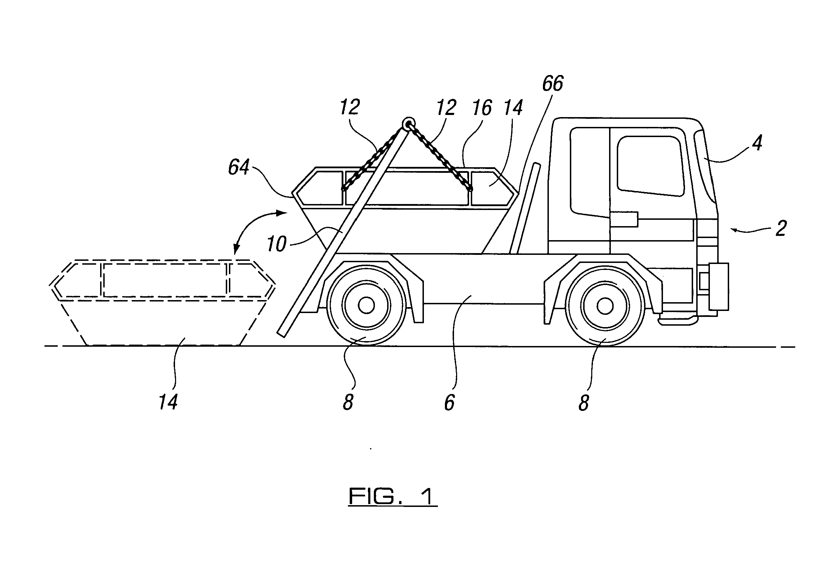

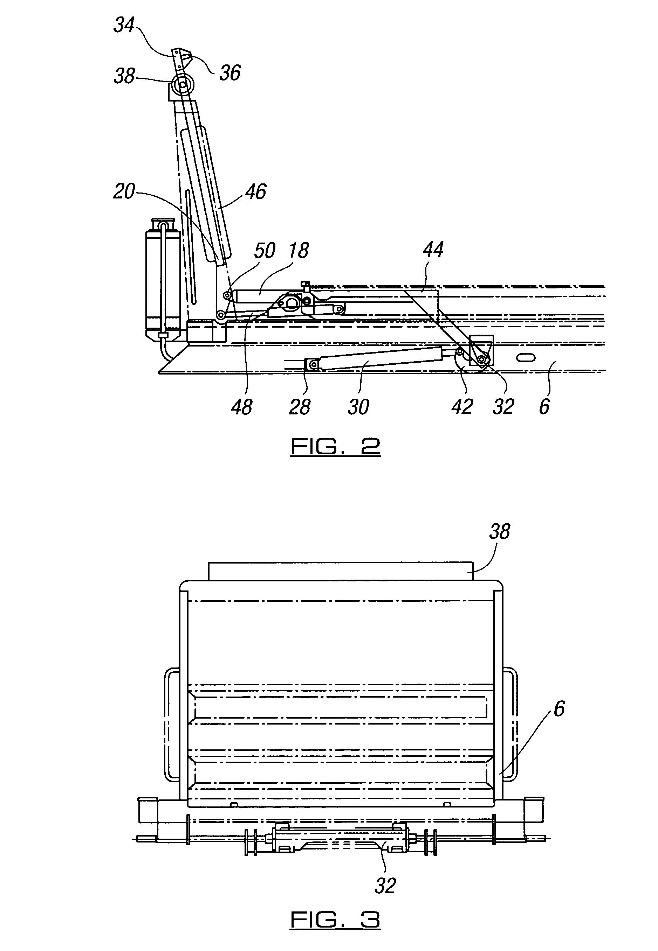

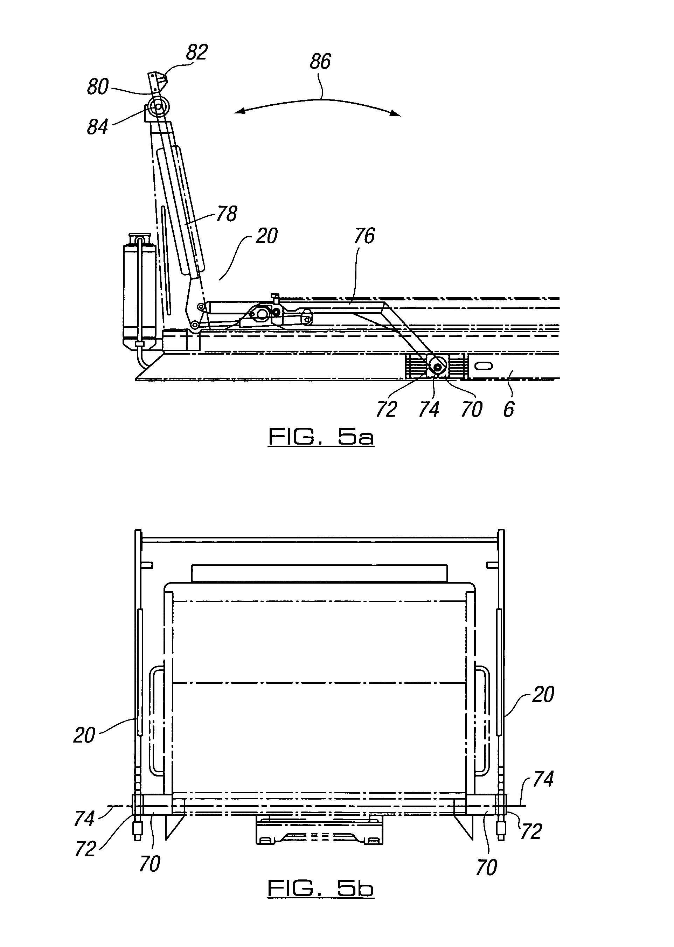

Referring firstly to Figure 1, there is illustrated a vehicle 2 of a type with which the cover assembly of the invention can be used. The vehicle comprises a vehicle cab 4, chassis 6 which depends to the rear of the vehicle, wheels 8 and lifting arms 10, with one lifting arm being provided at each side of the vehicle chassis. The lifting arms 10 are provided to allow chains 12 suspended therefrom, to contact with and move a container in the form of a skip 14 between the position shown in Figure 1 in which the same is mounted on the vehicle chassis, for transport, and a position to the rear of the vehicle chassis (shown in broken lines) which allows the skip to be deposited and left to be filled with loose material, or alternatively to be left and the loose material therein to be processed or discarded. The use of a vehicle of this type is well known and typically, when the skip is in the position shown in Figure 1, the same is either empty or is filled with loose material. It will be appreciated that once the vehicle moves, the speed of transit and/or other wind sources, can cause the loose material to leave the skip opening 16 which causes safety and environmental hazard. Thus in accordance with the invention, there is provided a cover assembly, one embodiment of which is described with respect to Figures 2-4d and another embodiment is shown in Figure 5a-b.

Figure 2 illustrates the front end of vehicle chassis of Figure 1, with a cover assembly 18 fitted thereto and without a skip in position for ease of reference. The assembly comprises first and second structures 20, one provided on each side of the vehicle chassis and one example of which is shown in Figure 2. The structures are provided in a position such that the same can respectively pass externally of the lifting arm 10 on each side of the vehicle.

The structures 20 are, in the embodiment shown in Figures 2-4d located at one end 28, on the chassis 6 with a ram 30 connected to a rotational shaft 32 shown in Figure 3 which passes across the width of the chassis. At the free end 34 of the structures there is provided a cross-member 36 which extends between the respective free ends 34 along with a roller on which is wound part of the cover sheet material 40 (not shown). The roller is typically spring loaded to allow tension to be maintained in the sheet material as it is being wound and unwound between storage and extended conditions. This prevents sagging and ensures smooth movement between positions.

Intermediate the ends 28, 34 of each structure, there is provided a ram 30 leading to pivot shaft 32 on which is located a cam, 42 connected to the ram and rotatable on shaft 32. The cam acts on the next member 44 of the portion which is an elbow joint pivotally connected to member 46. The relative angular position of member 44 with respect to member 46 is controlled via movement of the ram 48 mounted to act on the same about pivot point 50. Thus it will be appreciated that the combination of the movement force exerted by rams 30, 48 and the positioning of the cam 42 about shaft 32 achieves the required movement of the cover assembly 18 between storage and extended positions and, furthermore, movement in the required manner.

An alternative structure arrangement is shown in figures 5a-b. In this arrangement each of the actuation means structures 20 comprise a rotational drive 70 mounted on the chassis 6 and which can be connected via a linking shaft 72 passing across the chassis. The structures free ends 80 are each connected to be pivotally moved about axis 74 by the drive 70 at each side of the chassis. The remainder of each structure 20 comprises members 76, 78 leading to free end 80 with cross member 82 and roller 84 around which the sheet material is wound. In this embodiment rotation of the drive means 70 causes movement of the structures 20 as indicated by arrow 86.

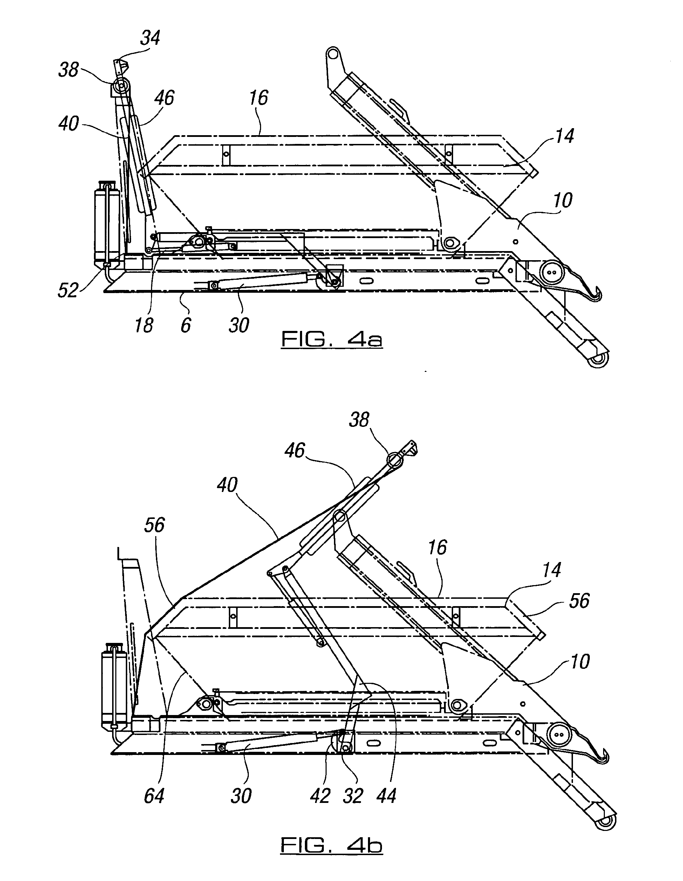

Figures 4a-d illustrate the movement of the cover assembly 18 between storage and extended positions, which is similar in both embodiments of the invention, with reference to a vehicle chassis 6 with a skip 14 mounted thereon and the lifting arms 10 shown. Although shown with the structures 20 of figures 2 and 3 it should be appreciated that the movement achieved is similar in the embodiment of figures 5a-b.

It will be seen from Figure 4a, that the cover assembly 18 can be provided in a storage position in which the sheet material is substantially all wound up on roller 38 and the structures 20 lie close to the chassis 6 and therefore are provided in a position substantially out of the way of the skip, and thereby minimising the risk of damage to the cover assembly, by the movement of the skip to and from the vehicle chassis.

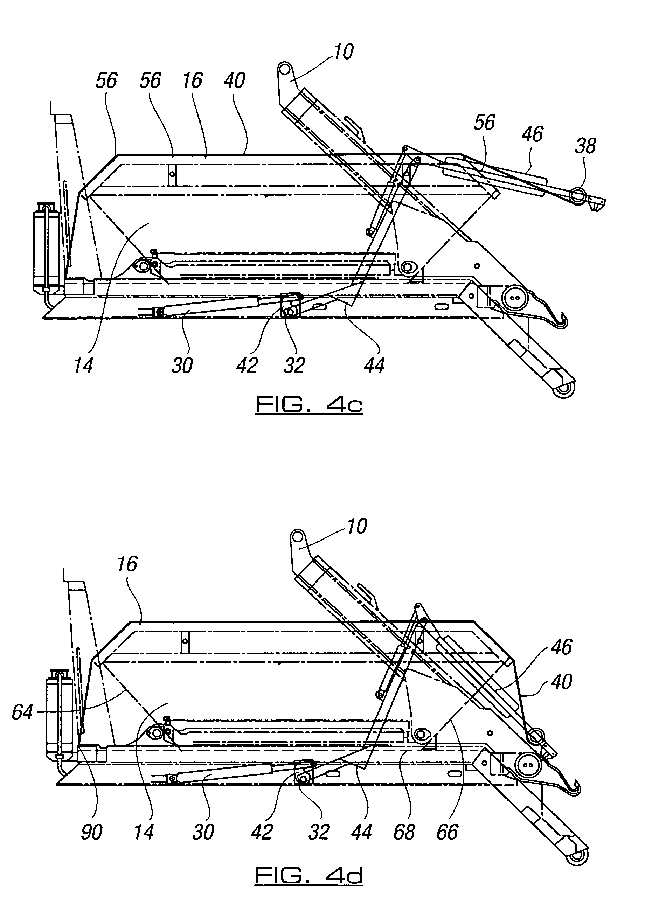

When a skip 14 is loaded onto a vehicle chassis 6 as shown, with loose material therein, there is a need to contain the same in the skip, and the cover assembly can be moved from the storage position of Figure 4a to an extended position as is indicated in Figure 4d which shows the cover assembly 18 in a fully extended position. To achieve this, structures 20 pass through the stages shown in Figure 4b and 4c. The rotation of the structures 20 is progressive to cause portion 44 to rotate about shaft pivot axis 32, in a desired manner as shown in Figures 4b-d so as to cause member 46 to move and allow the sheet material 40 to un wound from roller 38 and move over the top of the skip as shown in figure 4b and when nearly fully extended the cover is lowered to contact over the angled top edges 56 of the skip 14 and which top edges define the non-planer opening into the skip.

The ability to move the structures 20 in the manner described means that the sheet material does not become snagged on the skip opening edges and/or is not hindered by varying container sizes and/or does not discriminate in operation with respect to the container size as it moves between the storage position of Figure 4a, through the position of Figure 4b and c and to the fully extended position of Figure 4d. The structures can be provided such that the required reach of the free end of the structures 20 is sufficient to bring the end of the sheet material at roller 38, 84 to lie at a position below the opening 16 of the skip 14.

It will be appreciated that when the cover assembly is in the extended position shown in Figure 4d, the sheet material 40 extends across the opening 16 of the skip and also extends down the end walls 64, 66 to the base 68 of the skip. This therefore ensures that the loose material in the skip is properly enclosed and there is a minimal risk of the same leaving the skip or vehicle chassis through the opening 16 during transit. As the opposing end 90 of the sheet material is fixed in position below the opening and in line with the base of the skip so the opening and opposing end walls of the skip are enclosed.

To move the cover assembly to the storage position of Figure 4a from the extended position of Figure 4d the movement of the members of the structures 20 are reversed, as is the winding of the sheet material 40 and the sequence would be from Figure 4d, to the position shown in Figure 4c, the position shown in Figure 4b and so the storage position of Figure 4a is achieved.

Preferably the movement of the cover assembly between the storage and extended position is automated such that once commenced by the activation of suitable control means the cover assembly automatically moves to one or the other of the positions shown in Figures 4a or 4d as appropriate.

Although not shown the cover sheet material is preferably pleated with pleats running parallel to the length of the container such that when in the storage and winding stages the width of the sheet material is at its narrowest with the pleats not extended, but when in the in use position the pleats expand to allow the width of the sheet material to expand to overlie, and preferably overlap the width of the skip opening. This therefore allows the cover assembly to be provided in a form in which the sheet material or mechanism do not conflict with the container or lifting arms of the same and operation of the same to allow the mounting and demounting of the container. However the pleats allow the sheet material to expand at the appropriate time to allow the full width of the opening to be covered.

Thus thete is provided a cover assembly and apparatus which allows for effective implementation of a means to allow waste or other material to be retained within a skip during transport of the same. This ensures that the waste material does not represent a hazard either to other motorists or environmentally. The ease of implementation also makes it more attractive to be used by the vehicle operator.

## Claims

**1.** A cover assembly for a vehicle having a cab, a chassis to the rear of the cab and a container for carrying loose material which can be selectively moved via lifting arms, said cover assembly including a portion of sheet material and actuation means such that when the container is in a transport position on the vehicle, the sheet material can be selectively moved by the actuation means to a position at least substantially overlying an opening of the container to substantially enclose the said material within the container during transport of the same.

**2.** An assembly according to claim 1 wherein the sheet material is moved from a substantially wound position in storage to an extended position in use.

**3.** An assembly according to claim 2 wherein one end of the sheet material is fixed in position with regard to the vehicle chassis and the other end of the sheet material is moved by the actuation means with respect to the vehicle chassis.

**4.** An assembly according to claim 1 wherein when the cover assembly is in an in use position, a first end of the sheet material is positioned at or below the lowest point of the opening of the container and the opposing end of the sheet material is also positioned at or below the lowest point of the opening of the container.

**5.** An assembly according to claim 4 wherein the said first and second ends of the sheet material are positioned substantially in line with the base of the container when in the in use position.

**6.** An assembly according to claim 1 wherein the container opening edges in side elevation at least are non planar and the container is mountable onto and demountable from the vehicle chassis by the lifting arms.

**7.** An assembly according to claim 1 wherein the actuation means comprise first and second structures, a first structure on the first side of the vehicle chassis and a second structure on the opposing second side of the vehicle chassis.

**8.** An assembly according to claim 7 wherein each of the structures are positioned externally of the container and lifting arms provided for the same.

**9.** An assembly according to claim 7 wherein each of the first and second structures comprise a series of members, said members pivotally and/or linearly movable with respect to each other so to allow articulated movement of the respective structures members between the in use and storage positions of the cover assembly.

**10.** An assembly according to claim 9 wherein the movement of the said structures is synchronised.

**11.** An assembly according to claim 9 wherein both structures include a rotatable drive which causes the movement of the structures between in use and storage positions.

**12.** An assembly according to claim 9 wherein each of the structures includes a cam assembly which acts to move the members between the in use and storage positions.

**13.** An assembly according to any of the preceding claims wherein the assembly includes a roller mounted between the free ends of the first and second structures and on which one end of the cover sheet material is mounted so as to allow the rolling and unrolling of the sheet material as the assembly moves between in use and storage positions.

**14.** An assembly according to claim 13 wherein the said roller is actuated upon by a resilient means so as to maintain the sheet material in tension.

**15.** An assembly according to any of the preceding claims wherein the sheet material has at least one pleat formed therein such as to allow the width of the sheet material to increase when the same is in the in use position.

**16.** An assembly according to claim 15 wherein the expanded width is such to ensure that the full width of the opening of the container is covered by the sheet material.

**17.** An assembly according to claim 16 wherein a plurality of pleats are formed running substantially longitudinally of the sheet material and which pleats expand, as the sheet material is moved to the in use position and retract to reduce the width of the sheet material as the cover is being moved to the storage position.

**18.** A cover assembly according to claim 1 wherein the actuation means are mounted with respect to the container such that the cover can be moved to a substantially fully extended position prior to being placed downwardly into contact with the container or a material being held therein.

**19.** Art assembly according to any of the preceding claims wherein the operation of the assembly is controlled by an operator via a remote control.

**20.** An assembly according to any of the preceding claims wherein the container is mountable and demountable to and from the vehicle chassis.

**21.** A cover assembly for a vehicle mounted skip, said cover assembly comprising a sheet material to be used as a cover, said sheet material moved between unrolled extended and rolled storage positions by first and second structures spaced apart and attached to opposing sides of the vehicle, the free end of the respective structures supporting a roller on which a first end of the sheet material is mounted and guiding the movement of the roller, and hence sheet material, between the extended and storage positions and wherein the first and second structures are formed of a series of members movable so as to allow the movement of the sheet material between the extended positions covering an opening into the skip and a storage position withdrawn from the skip.

**21.** An assembly according to claim 20 wherein an opposing end of the sheet material is mounted in a fixed position on the vehicle chassis and the sheet material is wound and unwound to and from the roller mounted between said first and second members.

**22.** A vehicle including a cover assembly as described in any of the preceding claims.

**23.** A vehicle according to claim 22 wherein the vehicle is provided with lifting arms to allow a container to be mounted onto and demounted from the vehicle and the cover assembly is provided to cover over an opening into the container when the container is mounted on the vehicle.
